# FASCICULE DE BREVET EUROPEEN

(11) **EP 3 248 764 B1**
(45) Date de publication et mention de la délivrance du brevet: **11.08.2021**
(21) Numéro de dépôt: 17171857.0
(22) Date de dépôt: 19.05.2017
(51) Int. Cl.: B29C 70/34, B29C 65/36, B29C 35/02, B29C 65/00, B29D 99/00, B29K 71/00, B29K 105/16, F03D 1/06, B29C 35/08, B29L 31/08

(54) **PROCEDE ET PALE THERMOPLASTIQUE**
VERFAHREN UND THERMOPLASTISCHES FLÜGELBLATT
A METHOD AND A THERMOPLASTIC BLADE

(30) Priorité: 25.05.2016 FR 1600841
(43) Date de publication de la demande: 29.11.2017
(73) Titulaire: Airbus Helicopters, 13725 Marignane Cedex (FR)
(72) Inventeur: BOSCHET, Patrick, 78180 MONTIGNY LE BRETONNEUX (FR)
(74) Mandataire: GPI & Associés

(56) Documents cités:
- GB-A- 2 463 250
- US-A1- 2013 134 621
- US-A1- 2016 059 479

## Description

La présente invention concerne une pale dite « pale thermoplastique » et un procédé de fabrication d'une telle pale, notamment de giravion. L'invention se situe donc dans le domaine technique des pales réalisées à partir de fibres et de matrices thermoplastiques.

Une pale comporte divers organes incluant un revêtement extérieur et au moins un longeron. La pale peut de plus comporter des nervures, des renforts, un arêtier..

La pale peut être réalisée à partir de matériaux composites.

En particulier, des pales sont usuellement réalisées à partir de fibres minérales ou organiques et de matrices à résines thermodurcissables. Une telle pale est dite « pale thermodurcissable » par commodité en raison de l'emploi de ces résines thermodurcissables.

Par exemple, les éléments constituants les revêtements, nervures, renforts, longerons sont déposés directement dans un moule. Après application d'un cycle de polymérisation, ces divers éléments sont assemblés ensemble par un principe de cocuisson.

A l'issue de cette cuisson, la pale est démoulée, ragrée, et peinte.

Les pales thermodurcissables sont courantes. Néanmoins, l'utilisation de résines thermodurcissables s'avère contraignante.

En effet, la polymérisation est un phénomène de transformation chimique irréversible. Durant le cycle de polymérisation, une résine thermodurcissable passe de manière irréversible d'un état « liquide » à un état solide.

En outre, les composés chimiques utilisés dans des compositions de matériaux composites posent des problèmes de péremption de stockage.

De plus, des composés chimiques utilisés dans des compositions de matériaux composites ont été interdits pour des raisons toxicologiques, ou risquent d'être interdits dans le futur par certaines législations.

Par exemple, l'imprégnation de fibres par voie « solvant » avec du chlorure de méthylène est désormais proscrit par certaines législations.

Le document EP 0604297 propose une pale réalisée à partir de fibres minérales ou organiques et de matrices à base de résines thermoplastiques. Une telle pale est dite « pale thermoplastique » par commodité en raison de l'emploi de ces matériaux thermoplastiques.

Les documents FR2699498 et FR2699499 dévoilent une pale réalisée à partir de matériaux composites thermoplastiques

Selon le document FR2699499, des revêtements et des longerons sont réalisés en matériaux composites thermoplastiques. Les revêtements et les longerons sont disposés dans un moule d'injection. Dès lors, un matériau composite fluide de fibres courtes de renfort noyées dans une matrice thermoplastique chauffée à une température de fusion est injecté dans le moule afin de former des corps de remplissage voire une manchette de renfort interne d'un pied de pale.

Le matériau composite fluide comporte des granulés de matrice de PolyEtherEtherKetone connu sous l'acronyme « PEEK » dans laquelle sont noyées des fibres courtes de carbone. Avant toute utilisation, les granulés sont étuvés à une température d'environ 150 degrés Celsius pendant au moins trois heures. Ensuite, les granulés sont chauffés à une température de l'ordre de 400 degrés Celsius avant d'être injectés dans le moule, ce moule étant maintenu à une température de l'ordre de 150 degrés Celsius à 200 degrés Celsius.

Ce procédé est intéressant mais impose de chauffer tout un moule à des températures élevées et des granulés à des températures très élevées.

Le document EP 2256034 décrit une méthode de fabrication d'une pale par injection d'une résine thermodurcissable.

Le document EP 1880833 concerne des pales d'éolienne comprenant des matrices thermoplastiques sur des fibres de verre.

Le document FR2756211 n'appartient pas au domaine technique des pales et est cité à titre d'arrière plan éloigné uniquement.

De même, le document US4137218 n'appartient pas au domaine technique des pales et est cité à titre d'arrière plan éloigné. Ce document divulgue une constitution et un mode de fabrication d'un polyester thermoplastique à base de benzophénone.

Le document GB 2463250 décrit un procédé de fabrication d'une pale d'éolienne selon le préambule de la revendication 1. La pale comporte au moins deux tronçons, chaque tronçon ayant au moins une région d'extrémité en matériau thermoplastique.

Le document US 2016/059479 décrit un procédé de soudure d'un élastomère et d'un matériau composite.

La présente invention a alors pour objet de proposer un procédé pour fabriquer une pale thermoplastique innovante. En particulier, la pale peut être une pale d'un rotor d'aéronef, tel qu'un rotor d'une voilure tournante ou un rotor de contrôle du mouvement en lacet d'un aéronef par exemple, ou une pale d'hélice d'avion voire une aube de turbine...

L'invention vise donc un procédé pour fabriquer une pale, selon la revendication 1. Ce procédé comprend les étapes suivantes :
- fabrication de sous-ensembles en matériaux composites thermoplastiques, chaque sous-ensemble comportant un arrangement interne et au moins un arrangement externe accolé à l'arrangement interne, l'arrangement externe d'un sous-ensemble étant destiné à être adhérisé à un arrangement externe d'un autre sous-ensemble, chaque arrangement interne comprenant un empilement de plis dits « couches intermédiaires », chaque couche intermédiaire comprenant des fibres de renfort imprégnées d'une matrice thermoplastique semi-cristalline, chaque arrangement externe comprenant au moins un pli dit « couche de surface », chaque couche de surface comprenant des fibres de renfort imprégnées d'un alliage d'un polymère thermoplastique semi-cristallin et d'un polymère thermoplastique amorphe,
- disposition des sous-ensembles dans un moule d'assemblage,
- agencement local d'une pluralité de films d'assemblage comprenant un matériau thermoplastique amorphe et un organe ferromagnétique, chaque film d'assemblage étant interposé entre deux couches de surface de deux sous-ensembles distinctes qui sont à assembler l'un à l'autre,
- assemblage dans le moule d'assemblage des sous-ensembles l'un à l'autre en exerçant une pression sur lesdits sous-ensembles et en chauffant localement par induction chaque film d'assemblage selon un cycle de chauffe et de mise en pression judicieux.

Pour achever la fabrication, divers éléments peuvent équiper cette pale. Ainsi, des bagues métalliques ou céramiques peuvent être rapportées par collage ou frettage, par exemple sur un longeron. Ces bagues peuvent coopérer avec des broches de fixation à un moyeu ou encore des bielles de pas. De même, une coiffe de protection du bord d'attaque, qui peut contenir aussi un dégivreur ou pas, peut être rapportée par collage sur la pale.

Par conséquent, selon ce procédé, des sous-ensembles sont fabriqués séparément. Chaque sous-ensemble comprend un cœur réalisé à partir de matrices thermoplastiques semi-cristallines qui confère aux fibres de renfort une résistance optimisée. En outre, chaque sous-ensemble comprend une surface d'interface à adhérer ultérieurement à un autre sous-ensemble. Cette surface d'interface comprend non seulement une matrice thermoplastique semi-cristalline mais aussi une matrice thermoplastique amorphe. Cette matrice thermoplastique amorphe favorise le collage d'un sous-ensemble à un autre sous-ensemble en possédant une faculté de diffusion optimisée contrairement à une matrice thermoplastique semi-cristalline.

Par ailleurs, un film thermoplastique est disposé entre deux zones de collage de deux sous-ensembles. Ce film thermoplastique est aussi muni d'une matrice thermoplastique amorphe favorisant le collage. De plus, le film thermoplastique est dépourvu de fibres de renfort mais comprend un organe ferromagnétique.

Dès lors, durant l'étape d'assemblage, cet organe ferromagnétique est excité par un inducteur électromagnétique pour chauffer localement la pale. Le procédé prévoit ainsi de chauffer par induction des zones de chauffage limitées à des zones de cohésion prédéterminées couvertes par le film thermoplastique.

Contrairement à des procédés prévoyant d'injecter des résines fortement chauffées, ce procédé propose d'assembler les sous-ensembles localement par induction électromagnétique par diffusion de matrices thermoplastiques amorphes.

Dès lors, les autres zones des sous-ensembles ne sont pas particulièrement chauffées ce qui permet de ne pas impacter l'intégrité structurelle des sous-ensembles.

En effet, une matière thermoplastique peut subir plusieurs cycles de ramollissement par chauffage, contrairement à une matière thermodurcissable. Dès lors, une étape d'assemblage de sous-ensembles thermoplastiques par chauffage risque d'induire une déformation des sous-ensembles. Le procédé de l'invention permet d'y remédier en utilisant un film muni d'une matière thermoplastique amorphe à forte capacité de diffusion chauffée localement par induction.

Le chauffage par induction électromagnétique permet de plus d'atteindre rapidement une température supérieure à la température de transition vitreuse du film thermoplastique et de se situer dans la zone dite de « plateau caoutchoutique ». Le film thermoplastique est ainsi ramolli rapidement pour favoriser l'enchevêtrement et la diffusion des chaines macromoléculaires du matériau thermoplastique amorphe dans les sous-ensembles à coller.

En outre, le chauffage par induction peut alors permettre d'optimiser l'énergie électrique nécessaire pour la réalisation de l'étape d'assemblage.

Ce procédé permet ainsi d'obtenir une pale innovante réalisée avec des matériaux thermoplastiques à partir de sous-ensembles. Les sous-ensembles sont éventuellement réalisés avec une seule presse de mise en œuvre.

L'utilisation de matériaux thermoplastiques permet aussi de résoudre les problèmes de stockage et environnementaux liés à l'utilisation de certains matériaux thermodurcissables. De plus, les matrices thermoplastiques présentent des niveaux de viscosité très élevés au regard des niveaux de viscosité des matrices thermodurcissables, ce qui tend à réduire les disparités de fabrication liées au fluage des matrices thermodurcissables et donc procure une maitrise plus élevée de la masse en final de chaque sous ensemble favorable à l'opération d'équilibrage de la pale en final.

Ce procédé s'inscrit alors dans une démarche « d'écoconception » tant au niveau des choix des matériaux que des systèmes de chauffage utilisés avec une éventuelle réduction de l'énergie nécessaire à la fabrication de la pale. De plus, la pale peut être finalisée par application de « peintures poudres » dans une démarche d'écoconception encore plus aboutie.

Ce procédé peut de plus être appliqué par des robots pour répondre à une organisation optimisée d'une ligne de fabrication dédiée, à surface au sol optimisée.

Par ailleurs et pour optimiser le procédé, les divers sous-ensembles peuvent être réalisés successivement en grand nombre par campagne, et peuvent être stockés à température ambiante. Travailler par campagne tend à induire un taux de rebuts minimisé.

En outre, ce procédé est applicable pour réaliser aussi bien des pales de petites dimensions par exemple pour un rotor de contrôle du mouvement en lacet d'un hélicoptère, que des pales de grandes dimensions par exemple pour un rotor de sustentation d'un hélicoptère, voire une hélice d'avion ou d'autres applications (aube ..).

Le procédé peut de plus comporter une ou plusieurs des caractéristiques qui suivent.

Eventuellement, le matériau thermoplastique amorphe des films d'assemblage comporte au moins le polymère thermoplastique amorphe des couches de surface.

Cette caractéristique peut tendre à optimiser l'adhésion de deux sous-ensembles l'un à l'autre. De plus, cette caractéristique permet de limiter le nombre de matériaux différents utilisés.

Par ailleurs, chaque fibre de renfort peut être à choisir dans une liste comprenant au moins : une fibre de verre, une fibre de carbone, une fibre de basalte, une fibre d'aramide.

En outre, chaque sous-ensemble peut être à choisir dans une liste comprenant au moins : un longeron, un raidisseur, un revêtement extérieur, un arêtier, voire un dégivreur optionnel.

Une telle pale peut alors être creuse en étant dépourvue d'un corps de remplissage en nid d'abeilles ou en mousses potentiellement problématique d'un point de vue environnemental en fonction de l'évolution des législations.

Par exemple, la pale comporte au moins un longeron, au moins un arêtier, un pluralité de raidisseurs et une pluralité de revêtements extérieurs, des revêtement extérieurs étant accolés en envergure pour former une paroi d'extrados, des revêtement extérieurs étant accolés en envergure pour former une paroi d'intrados, chaque arêtier ainsi que chaque longeron et chaque raidisseur s'étendant entre ladite paroi d'extrados et ladite paroi d'intrados, au moins un raidisseur étant localisé à la jonction entre deux revêtements extérieurs de la paroi d'intrados et deux revêtements extérieurs de la paroi d'extrados.

Le raidisseur peut notamment avoir une section en I.

La pale peut ainsi comprendre principalement des sous-ensembles thermoplastiques.

Selon un autre aspect, la matrice thermoplastique semi-cristalline peut être du PolyEtherEtherKetone « PEEK ».

Chaque couche intermédiaire peut ainsi comprendre uniquement une matrice pourvue à 100% de PolyEtherEtherKetone pour présenter des caractéristiques structurales optimisées.

En ce qui concerne les couches de surface, le polymère thermoplastique semi-cristallin peut être du PolyEtherEtherKetone « PEEK », le polymère thermoplastique amorphe étant du polyétherimide « PEI ».

Eventuellement, l'alliage d'un polymère thermoplastique semi-cristallin et d'un polymère thermoplastique amorphe comporte 70% de PolyEtherEtherKetone PEEK et 30% de polyétherimide PEI.

Cette répartition permet d'obtenir un alliage qui présente à la fois de bonnes caractéristiques structurales et une bonne faculté de diffusion.

Dès lors, un longeron peut être réalisé à partir de divers matériaux. Par exemple, chaque couche intermédiaire peut prendre la forme de tissus satin 5, unidirectionnel UD PLAIN 80-20 ou UD PLAIN 90-10 de fibres imprégnées avec de la poudre de PolyEtherEtherKetone PEEK.

Chaque couche de surface peut prendre la forme de tissus satin 5, UD PLAIN 80-20 ou 90-10 de fibres puis avec un alliage de polymères thermoplastiques d'un mélange de 70% de poudre PolyEtherEtherKetone PEEK et de 30% de poudre polyétherimide PEI.

Pour la fonction revêtement de pale, plusieurs choix sont aussi possibles. Par exemple, chaque couche intermédiaire peut comprendre des renforts en tissu de verre 7781 ou tissu de BASALTE 7781 ou tissu de carbone G963 poudrés avec de la poudre de PolyEtherEtherKetone PEEK. Chaque couche de surface peut comprendre des renforts en tissu de verre 7781 ou tissu de BASALTE 7781 ou tissu de carbone G963 poudrés d'un mélange de 70% de poudre PolyEtherEtherKetone PEEK et de 30% de poudre polyétherimide PEI.

Les raidisseurs peuvent comprendre des renforts en fibres courtes de longueurs comprises entre 2 mm et 10 cm par exemple imprégnées de PolyEtherEtherKetone PEEK pour les couches intermédiaires, et d'un mélange de 70% de poudre PolyEtherEtherKetone PEEK et de 30% de poudre polyétherimide PEI pour les couches de surface.

Pour l'arêtier, une nappe unidirectionnelle poudrée de PolyEtherEtherKetone PEEK pour les couches intermédiaires, et d'un mélange de 70% de poudre PolyEtherEtherKetone PEEK et de 30% de poudre polyétherimide PEI pour les couches de surface.

Selon un autre aspect, le matériau thermoplastique amorphe d'un film d'assemblage peut comporter au moins un polyétherimide PEI.

Par ailleurs, l'organe ferromagnétique d'un film d'assemblage peut comporter des particules de ferrite ou un élément métallique.

L'expression « élément métallique » désigne une pièce structurale en métal.

Par exemple, un élément métallique comporte une grille, et par exemple une grille en cuivre.

Un élément métallique et/ou une poudre ferrite très fine sont incorporés dans la matrice thermoplastique du film d'assemblage pour servir d'éléments chauffants réactifs au chauffage par induction.

Le film d'assemblage peut aussi comprendre un tissu métallique conducteur en cuivre étiré type astrostrike® ou autre tissu conducteur, pris en sandwich entre deux épaisseurs d'une matrice thermoplastique.

Selon un autre aspect, le matériau thermoplastique amorphe peut comporter du benzophénone et/ou du propriophénone.

Les sous-ensembles sont munis de couches intermédiaires comprenant uniquement une matrice thermoplastique semi-cristalline. Dès lors, les sous-ensembles ont une température de transition vitreuse de l'ordre de 145 degrés Celsius.

A l'inverse, un film d'assemblage muni uniquement d'une matrice thermoplastique amorphe a une température de transition vitreuse de l'ordre de 210 degrés Celsius. L'ajout du benzophénone et/ou du propriophénone permet d'obtenir une température de transition vitreuse de l'ordre de 150 degrés Celsius pour le film d'assemblage (au travers d'une relation Tg fct concentration soit de benzophénone, soit de propriophénone introduit dans le film.).

Ainsi, l'étape d'assemblage peut être réalisée à une température de 150 degrés Celsius plus faible que lesdits 210 degrés Celsius pour garder l'intégrité et la stabilité dimensionnelle des sous-ensembles pendant l'opération finale d'assemblage.

Pour éviter que les matériaux des sous-ensembles se relaxent au niveau dimensionnel, du benzophénone ou du propriophénone est ajouté dans le film d'assemblage. En fonction des concentrations utilisées, la température de transition vitreuse du film d'assemblage peut être de l'ordre de 150 degrés Celsius, tout en restant au-dessus de la température de transition vitreuse des sous-ensembles. Plus la température de transition vitreuse du film d'assemblage est basse, plus la thermocinétique de la diffusion des matrices plastiques est accélérée, selon la théorie de la reptation de Pierre-Gilles DE GENNES.

Selon un autre aspect, l'étape de fabrication de sous-ensembles peut comporter les phases suivantes pour fabriquer un sous-ensemble :
- agencement desdits plis dans un moule de fabrication,
- chauffage desdits plis dans le moule de fabrication selon un cycle de chauffe atteignant une température maximale dite « température de chauffe ».

La définition d'un cycle de chauffe optimisé vise à s'assurer de la santé de la structure thermodiffusée.

Les plis peuvent être agencés un à un dans le moule de fabrication.

Toutefois, selon une variante et préalablement à la phase d'agencement des plis dans le moule de fabrication, l'étape de fabrication de sous-ensembles comporte les phases suivantes :
- dépôt des plis un par un dans un moule de positionnement, chaque pli déposé dans le moule de positionnement étant soudé localement au pli déposé précédemment, afin de garantir une très grande qualité d'orientation du renfort en final.
- transfert des plis du moule de positionnement au moule de fabrication.

Par exemple, un moule de positionnement en bois est utilisé pour empiler les plis d'un sous-ensemble.

Les plis sont alors transférés conjointement dans un moule de fabrication par exemple en acier. Les plis subissent alors un cycle de chauffe, en étant chauffés et comprimés par une presse usuelle.

En outre, préalablement à la phase d'agencement desdits plis dans un moule de fabrication, lesdits plis d'un sous-ensemble comprenant des fibres ensimées, l'étape de fabrication de sous-ensembles peut comporter les phases suivantes de fabrication desdits fibres ensimées :
- application d'une poudre d'un polymère thermoplastique sur au moins une fibre de renfort désensimée,
- adhésion par chauffage dudit polymère thermoplastique sur la fibre de renfort désensimée.

Les plis peuvent être réalisés à partir d'une fibre désensimée. La fonction ensimage est reconstruite durant le cycle de chauffe de façon à développer des germinations fibrillaires et donc une croissance semi-cristalline sur les fibres pour doper les performances finales en fatigue des sous-ensembles de la pale.

Cette caractéristique est plus particulièrement adaptée avec des fibres en carbone.

Selon un autre aspect, le cycle de chauffe et de mise en pression de l'étape d'assemblage peut comporter une phase de montée en température jusqu'à un température maximale dite « température d'assemblage » des films d'assemblage, une phase de maintien de ladite température d'assemblage, puis une phase de réduction de la température des films d'assemblage, ladite température d'assemblage étant inférieure à ladite température de chauffe.

La phase de montée en température et/ou la phase de réduction de la température peuvent par exemple être réalisée avec un gradient de température de l'ordre de 10 degrés Celsius par minute.

En outre, la température d'assemblage peut être comprise entre 150 degrés Celsius et 210 degrés Celsius, la température de chauffe étant comprise entre 350 et 450 degrés Celsius.

Selon un autre aspect, chaque couche de surface peut comporter un fil traceur, le fil traceur permettant de distinguer visuellement une couche de surface composée d'un alliage de polymères d'une couche intermédiaire 100% en résine PEEK.

Outre un procédé, l'invention a pour objet une pale comprenant des sous-ensembles en matériaux composites thermoplastiques susceptible d'être obtenue à partir dudit procédé, selon la revendication 17.

Dès lors, chaque sous-ensemble comporte un arrangement interne et au moins un arrangement externe accolé à l'arrangement interne, l'arrangement externe d'un sous-ensemble étant adhérisé à l'arrangement externe d'une autre sous-ensemble, chaque arrangement interne comprenant un empilement de plis dits « couches intermédiaires », chaque couche intermédiaire comprenant des fibres de renfort imprégnées d'une matrice thermoplastique semi-cristalline, chaque arrangement externe comprenant au moins un pli dit « couche de surface », chaque couche de surface comprenant des fibres de renfort imprégnées d'un alliage d'un polymère thermoplastique semi-cristallin et d'un polymère thermoplastique amorphe, un film d'assemblage comprenant un matériau thermoplastique amorphe et un organe ferromagnétique interposé entre deux couches de surface de deux sous-ensembles distinctes assemblées l'une à l'autre.

L'invention et ses avantages apparaîtront avec plus de détails dans le cadre de la description qui suit avec des exemples donnés à titre illustratif en référence aux figures annexées qui représentent :
- la figure 1, un schéma illustrant des étapes du procédé,
- la figure 2, un schéma illustrant un sous-ensemble selon l'invention,
- les figures 3 à 7, des schémas illustrant différentes phases d'une étape de fabrication de sous-ensembles,
- les figures 8 à 10, des schémas présentant différents types de sous-ensembles,
- les figures 11 et 12, des schémas illustrant une étape de préparation de l'assemblage des sous-ensembles,
- la figure 13, un diagramme illustrant un cycle de chauffe et de mise en pression,
- la figure 14, un schéma illustrant une pale selon l'invention.

Les éléments présents dans plusieurs figures distinctes sont affectés d'une seule et même référence.

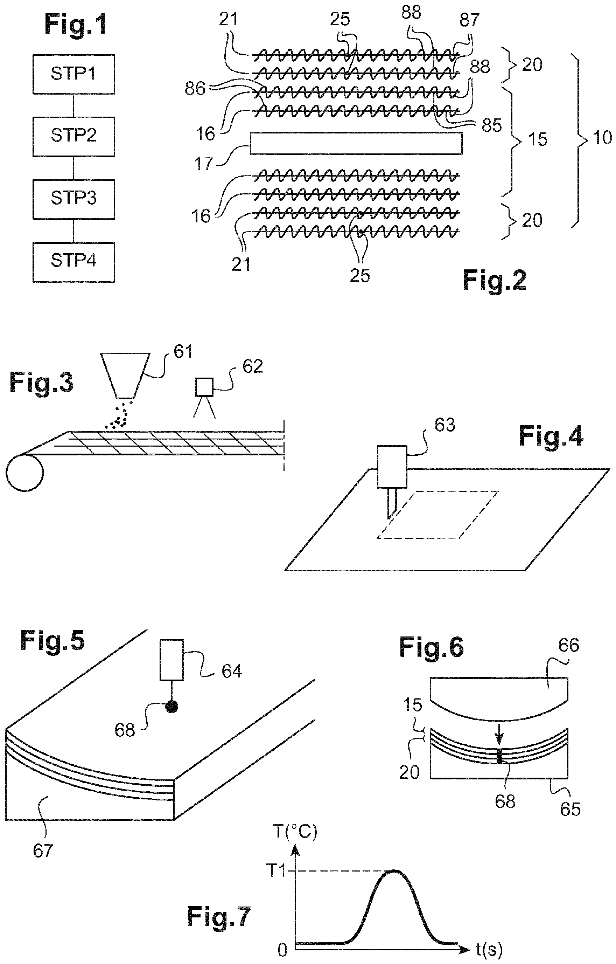

La figure 1 illustre le procédé selon l'invention pour fabriquer une pale. Une telle pale peut être une pale d'un rotor d'un aéronef, ou encore une aube d'un moteur par exemple ou d'une hélice d'avion ...

Ce procédé comprend une étape préliminaire STP1 de fabrication de sous-ensembles en matériaux composites thermoplastiques de la pale.

En référence à la figure 2, chaque sous-ensemble 10 peut être décomposé en un arrangement interne 15 et au moins un arrangement externe 20. Chaque arrangement externe 20 est solidarisé à l'arrangement interne 15. De plus, un arrangement externe 20 d'un sous-ensemble est destiné à être adhérisé à un arrangement externe d'un autre sous-ensemble.

Selon l'exemple de la figure 2, deux arrangements externes 20 d'un sous-ensemble sont positionnés de part et d'autre de l'arrangement interne 15 de ce sous-ensemble selon l'épaisseur de la pale. Néanmoins, un seul arrangement externe 20 peut être disposé sur ou sous l'arrangement interne 15 du sous-ensemble 10.

Selon un autre aspect, chaque arrangement interne 15 inclut au moins un empilement de plis thermoplastiques dénommés par commodité «couches intermédiaires 16 ». Chaque couche intermédiaire 16 inclut des fibres de renfort 85 imprégnées d'une matrice thermoplastique semi-cristalline 86. Une couche intermédiaire 16 peut prendre la forme d'un ensemble de fils, d'un ruban, d'un tissu, d'une nappe...

Chaque fibre de renfort 85 d'une couche intermédiaire 16 est à choisir dans une liste comprenant notamment : une fibre de verre, une fibre de carbone, une fibre de basalte, une fibre d'aramide. Une telle fibre de renfort peut être une fibre longue.

En outre, la matrice thermoplastique semi-cristalline 86 peut être du PolyEtherEtherKetone PEEK.

Selon un autre aspect, chaque arrangement externe 20 inclut au moins un pli thermoplastique dénommé par commodité « couche de surface 21 ». Chaque couche de surface 21 comprend des fibres de renfort 87 imprégnées d'un alliage 88, cet alliage 88 pouvant comprendre un mélange d'un polymère thermoplastique semi-cristallin et d'un polymère thermoplastique amorphe.

Chaque fibre de renfort 87 d'une couche de surface 21 est à choisir dans une liste comprenant notamment : une fibre de verre, une fibre de carbone, une fibre de basalte, une fibre d'aramide. Une telle fibre de renfort peut être une fibre longue.

En outre, le polymère thermoplastique semi-cristallin peut être du PolyEtherEtherKetone PEEK, et le polymère thermoplastique amorphe peut être du polyétherimide PEI. Plus précisément, l'alliage 88 peut comporter 70% de PolyEtherEtherKetone PEEK et 30% de polyétherimide PEI. Ces pourcentages sont donnés avec une marge de précision de plus ou moins 5%. Dès lors, l'alliage 88 peut comporter entre 65 % et 75% de PolyEtherEtherKetone PEEK et entre 25 et 35% de polyétherimide PEI

En outre, chaque couche de surface 21 peut comporter un fil traceur 25 pour pouvoir être visuellement distinguée d'une couche intermédiaire 16. Un tel fil traceur peut prendre la forme d'un fil présentant une couleur différente des autres éléments de la couche.

Selon un autre aspect, l'arrangement interne 15 peut comporter une âme réalisée notamment à partir d'une matrice thermoplastique 17. Par exemple, deux empilements de couches intermédiaires 16 sont disposés en épaisseur de part et d'autre d'une âme. Une telle âme peut comprendre une mousse en polyétherimide PEI. De plus, une couche de liaison du type d'une couche de surface peut être agencée entre une couche intermédiaire et l'âme.

Selon un autre aspect, chaque pli 16, 21 d'un sous-ensemble peut comprendre des fibres ensimées par la matière thermoplastique correspondant à ce pli, à savoir la matrice thermoplastique semi-cristalline 86 pour une couche intermédiaire et l'alliage 88 pour une couche de surface.

Toutefois et en référence à la figure 3, le procédé peut prévoir lors de l'étape préliminaire STP1 d'appliquer une poudre d'un polymère thermoplastique sur au moins une fibre de renfort désensimée, à l'aide d'une trémie 61 par exemple. Ce polymère thermoplastique est soit la matrice thermoplastique semi-cristalline 86 pour une couche intermédiaire 16 et soit l'alliage 88 pour une couche de surface 21. La poudre est ensuite chauffée, par exemple par une lampe infrarouge 62 pour adhérer aux fibres.

La figure 3 illustre un rouleau d'un tissu comprenant des fibres alignées selon deux directions (sens chaine et sens trame), mais tout autre type de pli est envisageable.

Par ailleurs, le procédé peut prévoir lors de l'étape préliminaire STP1 d'utiliser des matériaux pré-imprégnés des postes de découpes 63 illustrés sur la figure 4, tel qu'un outillage de découpe subsonique usuel par exemple.

Dès lors, le procédé peut proposer de réaliser deux types de plaques, à savoir des plaques destinées à des couches intermédiaires et des plaques destinées à des couches de surface. De telles plaques peuvent être stockées relativement aisément et peuvent être découpées par les postes de découpes 63.

Pour fabriquer un sous-ensemble donné, les postes de découpes 63 découpent les plaques lors de l'étape préliminaire STP1 pour obtenir les couches adéquates.

Eventuellement et en référence à la figure 5, les différents plis d'un sous-ensemble sont positionnés l'un par rapport à l'autre dans un moule de positionnement 67.

Par exemple, chaque pli est soudé par un poste de soudure 64 au pli précédemment déposé sur le moule de positionnement 67. Le poste de soudure peut éventuellement réaliser un unique point de soudure 68 par pli.

Plusieurs plis voire tous les différents plis d'un sous-ensemble 10 sont alors transférés conjointement dans un moule de fabrication 65 illustrés sur la figure 6.

Selon une variante, les plis sont disposés dans le moule de fabrication 65 sans passer préalablement dans un moule de positionnement 67.

Quelle que soit la variante, l'étape de fabrication de sous-ensembles comporte donc une phase d'agencement des plis des arrangements 15, 20 dans le moule de fabrication 65.

Une presse chauffante 66 est alors utilisée pour comprimer et chauffer les plis des arrangements 15, 20 sur le moule de fabrication 65 selon un cycle de chauffe.

La figure 7 illustre un tel cycle de chauffe. Selon ce cycle de chauffe, les plis des arrangements sont chauffés jusqu'à atteindre une température maximale dite « température de chauffe T1 », avant d'être refroidis. La température de chauffe T1 peut être comprise entre 350 et 450 degrés Celsius.

Si les fibres de renfort des plis des arrangements sont des fibres désensimées, ce cycle de chauffe peut permettre de développer des germinations fibrillaires et donc une croissance semi-cristalline sur les fibres pour optimiser les performances finales en fatigue du sous-ensemble.

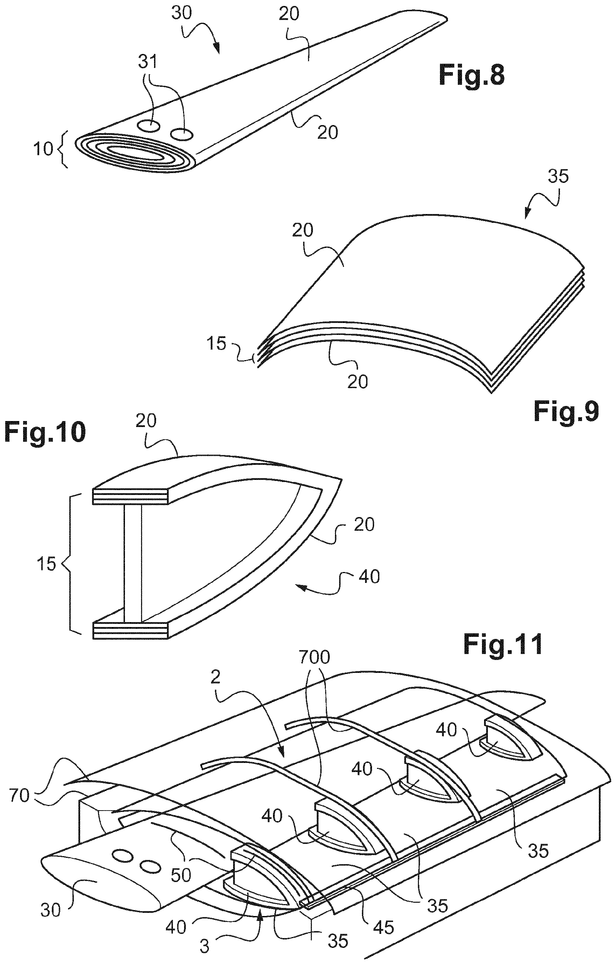

Les figures 8 à 10 illustrent divers types de sous-ensembles.

En effet, un sous-ensemble 10 peut être un longeron 30 illustré sur la figure 8. Ce longeron 30 peut comprendre des orifices 31 traversant son épaisseur pour coopérer avec une ferrure de montage par exemple.

Un sous-ensemble 10 peut être un revêtement extérieur 35 illustré sur la figure 9, ou encore un raidisseur 40 visible sur la figure 10.

Un sous-ensemble 10 peut aussi un arêtier de bord de fuite.

En référence à la figure 1, divers sous-ensembles sont donc fabriqués durant l'étape préliminaire STP1. Ces sous-ensembles peuvent être fabriqués par campagne pour optimiser le processus industriel. L'expression « par campagne » signifie qu'un seul type de sous-ensemble est fabriqué sur une période donnée. Par exemple, des longerons sont fabriqués pendant une semaine, puis des revêtements extérieurs sont fabriqués durant la semaine suivante ainsi de suite.

Pour fabriquer une pale, le procédé comporte en outre une étape de préparation STP2 pour préparer l'assemblage des sous-ensembles thermoplastiques de cette pale.

En référence à la figure 11, les sous-ensembles 10 d'une pale sont disposés dans un moule d'assemblage 70 durant cette étape de préparation STP2.

Le moule d'assemblage 70 peut comprendre des contre-formes supérieure et inférieure munies de moyens de chauffage 700 par induction électromagnétique. Par exemple, l'enseignement du document FR 2 918 919 peut être utilisé pour l'obtention d'un moule muni de moyens de chauffage par induction.

Selon la figure 11, une pale peut comporter au moins un longeron 30, au moins un arêtier 45, une pluralité de raidisseurs 40 et une pluralité de revêtements extérieurs 35 qui sont agencés dans le moule d'assemblage 70.

Des revêtements extérieurs 35 sont accolés l'un à l'autre en envergure pour former une paroi d'extrados 2, et d'autres revêtements extérieurs 35 sont accolés en envergure pour former une paroi d'intrados 3.

En outre, chaque arêtier 45 ainsi que chaque longeron 30 et chaque raidisseur 40 s'étendent au moins entre la paroi d'extrados 2 et la paroi d'intrados 3. En particulier, un raidisseur 40 peut avoir une section en I pour recouvrir d'une part la jonction entre deux revêtements extérieurs 35 de la paroi d'intrados 3 et, d'autre part, la jonction entre deux revêtements extérieurs 35 de la paroi d'extrados 2.

De plus, des films d'assemblage 50 sont agencés localement dans le moule d'assemblage 70. Chaque film d'assemblage est interposé entre deux couches de surface 21 de deux sous-ensembles distinctes qui sont à assembler l'un à l'autre.

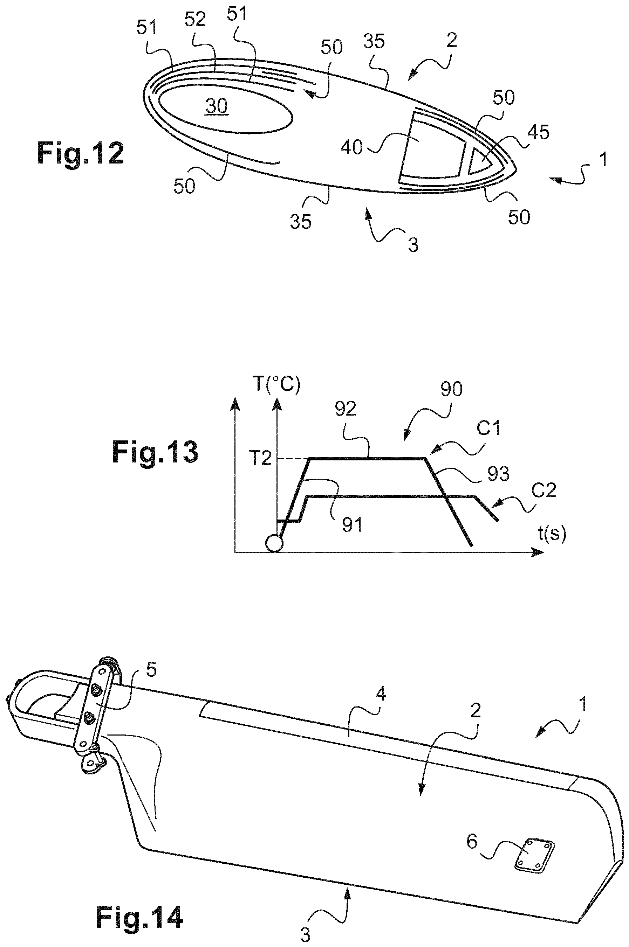

En référence à la figure 12, les films d'assemblage 50 couvrent uniquement les zones des sous-ensembles à assembler.

Par exemple, un film d'assemblage peut être disposé entre deux revêtements extérieurs 35, entre un revêtement extérieur 35 et un longeron 30, entre un revêtement extérieur 35 et un raidisseur 40, entre un revêtement extérieur 35 et l'arêtier 45...

Chaque film d'assemblage 50 inclut un matériau thermoplastique amorphe 51 et un organe ferromagnétique 52. Cet organe ferromagnétique 52 peut comporter des particules de ferrite et/ou un élément métallique qui sont noyés dans le matériau thermoplastique amorphe 51.

Par exemple, le matériau thermoplastique amorphe 51 inclut au moins du polyétherimide PEI.

Selon une alternative, le matériau thermoplastique amorphe 51 comporte alors uniquement du polyétherimide PEI.

Selon une autre alternative, le matériau thermoplastique amorphe 51 comporte du polyétherimide PEI du benzophénone et/ou du propriophénone.

En référence la figure 1, le procédé comporte alors une étape d'assemblage STP3. Durant cette étape d'assemblage STP3, les sous-ensembles 10 sont assemblés l'un à l'autre dans le moule d'assemblage 70 en exerçant une pression sur les sous-ensembles 10 et en chauffant localement par induction chaque film d'assemblage 50 selon un cycle de chauffe et de mise en pression.

La figure 13 illustre le cycle de chauffe et de mise en pression 90 au travers d'une courbe C1 illustrant une évolution de la température des films d'assemblage, et d'une courbe C2 illustrant une évolution de la pression des films d'assemblage,

Le cycle de chauffe et de mise en pression 90 peut comporter une première phase 91 de montée en température des films d'assemblage 50 jusqu'à une température maximale dite « température d'assemblage T2 ». La température d'assemblage T2 est inférieure à la température de chauffe T1, en étant par exemple comprise entre 150 degrés Celsius et 210 degrés Celsius.

Durant une deuxième phase 92, la température des films d'assemblage 50 est maintenue à la température d'assemblage T2, par exemple pendant 15 minutes.

Durant une troisième phase 93, la température des films d'assemblage 50 est réduite.

La pression des films d'assemblage est aussi augmentée, jusqu'à une pression maximale, sensiblement concomitamment à l'augmentation de la température.

La pression maximale est maintenue durant ladite deuxième phase 92, et le début de la troisième phase 93.

En référence à la figure 1, une étape de finition STP4 peut être entreprise à l'issue de l'étape d'assemblage STP3.

En référence à la figure 14, la pale 1 peut être ragréée et peinte à l'issue de l'étape d'assemblage STP3, par exemple par application d'une « peinture poudre ».

De plus, la pale 1 peut être par exemple équipée d'une coiffe de bord d'attaque 4 avec ou sans système de dégivrage agencée par collage, d'une ferrure 5 de fixation à un moyeu ou encore de masses d'équilibrage 6.

Indépendamment des finitions, suite à l'étape d'assemblage, chaque sous-ensemble 10 de la pale comporte un arrangement interne 15 et au moins un arrangement externe 20 accolé à l'arrangement interne 15, l'arrangement externe 20 d'un sous-ensemble 10 étant adhérisé à l'arrangement externe 20 d'un autre sous-ensemble 10, chaque arrangement interne 15 comprenant un empilement de plis dits « couches intermédiaires 16 », chaque couche intermédiaire 16 comprenant des fibres de renfort imprégnées d'une matrice thermoplastique semi-cristalline, chaque arrangement externe 20 comprenant au moins un pli dit « couche de surface 21 », chaque couche de surface 21 comprenant des fibres de renfort imprégnées d'un alliage d'un polymère thermoplastique semi-cristallin et d'un polymère thermoplastique amorphe, un film d'assemblage comprenant un matériau thermoplastique amorphe étant interposé entre deux couches de surface 21 de deux sous-ensembles distinctes assemblées l'une à l'autre.

## Revendications

1. Procédé pour fabriquer une pale (1), ledit procédé comprenant les étapes suivantes :
- fabrication de sous-ensembles (10) en matériaux composites thermoplastiques,
- disposition des sous-ensembles (10) dans un moule d'assemblage (70),
- agencement local d'une pluralité de films d'assemblage (50) comprenant un organe ferromagnétique, chaque film d'assemblage étant interposé entre deux couches de surface (21) de deux sous-ensembles distinctes qui sont à assembler l'un à l'autre,
- assemblage dans le moule d'assemblage (70) des sous-ensembles (10) l'un à l'autre en exerçant une pression sur lesdits sous-ensembles (10) et en chauffant localement par induction électromagnétique chaque film d'assemblage (50) selon un cycle de chauffe et de mise en pression,
**caractérisé en ce que** chaque sous-ensemble (10) comporte un arrangement interne (15) et au moins un arrangement externe (20) accolé à l'arrangement interne (15), l'arrangement externe (20) d'un sous-ensemble étant destiné à être adhérisé à un arrangement externe d'un autre sous-ensemble, chaque arrangement interne (15) comprenant un empilement de plis dits couches intermédiaires (16), chaque couche intermédiaire (16) comprenant des fibres de renfort imprégnées d'une matrice thermoplastique semi-cristalline, chaque arrangement externe (20) comprenant au moins un pli dit couche de surface (21), chaque couche de surface (21) comprenant des fibres de renfort imprégnées d'un alliage d'un polymère thermoplastique semi-cristallin et d'un polymère thermoplastique amorphe, chaque film d'assemblage comprenant un matériau thermoplastique amorphe (51).

2. Procédé selon la revendication 1,
**caractérisé en ce que** chaque fibre de renfort est à choisir dans une liste comprenant : une fibre de verre, une fibre de carbone, une fibre de basalte, une fibre d'aramide.

3. Procédé selon l'une quelconque des revendications 1 à 2, **caractérisé en ce que** chaque sous-ensemble (10) est à choisir dans une liste comprenant au moins : un longeron (30), un raidisseur (40), un revêtement extérieur (35), un arêtier (45).

4. Procédé selon l'une quelconque des revendications 1 à 3, **caractérisé en ce que** ladite pale (1) comporte au moins un longeron (30), au moins un arêtier (45), une pluralité de raidisseurs (40) et une pluralité de revêtements extérieurs (35), des revêtements extérieurs (35) étant accolés en envergure pour former une paroi d'extrados (2), des revêtements extérieurs (35) étant accolés en envergure pour former une paroi d'intrados (3), chaque arêtier (45) ainsi que chaque longeron (30) et chaque raidisseur (40) s'étendant entre ladite paroi d'extrados (2) et ladite paroi d'intrados (3), au moins un raidisseur (40) étant localisé à la jonction entre deux revêtements extérieurs (35) de la paroi d'intrados (3) et deux revêtements extérieurs (35) de la paroi d'extrados (2).

5. Procédé selon l'une quelconque des revendications 1 à 4, **caractérisé en ce que** ladite matrice thermoplastique semi-cristalline est du PolyEtherEtherKetone (PEEK).

6. Procédé selon l'une quelconque des revendications 1 à 5, **caractérisé en ce que** ledit polymère thermoplastique semi-cristallin est du PolyEtherEtherKetone (PEEK), ledit polymère thermoplastique amorphe étant du polyétherimide (PEI)

7. Procédé selon l'une quelconque des revendications 1 à 6, **caractérisé en ce que** ledit alliage d'un polymère thermoplastique semi-cristallin et d'un polymère thermoplastique amorphe comporte 70% de PolyEtherEtherKetone (PEEK) et 30% de polyétherimide (PEI).

8. Procédé selon l'une quelconque des revendications 1 à 7, **caractérisé en ce que** ledit matériau thermoplastique amorphe comporte au moins du polyétherimide (PEI).

9. Procédé l'une quelconque des revendications 1 à 8, **caractérisé en ce que** ledit organe ferromagnétique (52) comporte des particules de ferrite ou un élément métallique.

10. Procédé selon l'une quelconque des revendications 1 à 9,
**caractérisé en ce que** ledit matériau thermoplastique amorphe comporte du benzophénone et/ou du propriophénone.

11. Procédé de fabrication selon l'une quelconque des revendications 1 à 10, **caractérisé en ce que** ladite étape de fabrication de sous-ensembles comporte les phases suivantes pour fabriquer un sous-ensemble (10) :
- agencement desdits plis dans un moule de fabrication (65),
- chauffage desdits plis dans le moule de fabrication (65) selon un cycle de chauffe atteignant une température maximale dite température de chauffe (T1).

12. Procédé selon la revendication 11,
**caractérisé en ce que**, préalablement à la phase d'agencement desdits plis dans un moule de fabrication (65), lesdits plis d'un sous-ensemble comprenant des fibres ensimées, ladite étape de fabrication de sous-ensembles (10) comporte les phases suivantes de fabrication desdits fibres ensimées :
- application d'une poudre d'un polymère thermoplastique sur au moins une fibre de renfort désensimée,
- adhésion par chauffage dudit polymère thermoplastique sur la fibre de renfort désensimée.

13. Procédé selon l'une quelconque des revendications 11 à 12,
**caractérisé en ce que**, préalablement à la phase d'agencement desdits plis dans un moule de fabrication (65), ladite étape de fabrication de sous-ensembles comporte les phases suivantes :
- dépôt des plis un par un dans un moule de positionnement (67), chaque pli déposé dans le moule de positionnement (67) étant soudé localement au pli déposé précédemment,
- transfert des plis du moule de positionnement (67) au moule de fabrication (65).

14. Procédé selon l'une quelconque des revendications 11 à 13,
**caractérisé en ce que** ledit cycle de chauffe et de mise en pression (90) comporte une phase (91) de montée en température jusqu'à un température maximale dite température d'assemblage (T2) des films d'assemblage (50), une phase (92) de maintien de ladite température d'assemblage (T2), puis une phase (93) de réduction de la température des films d'assemblage, ladite température d'assemblage (T2) étant inférieure à ladite température de chauffe (T1).

15. Procédé selon la revendication 14,
**caractérisé en ce que** ladite température d'assemblage (T2) est comprise entre 150 degrés Celsius et 210 degrés Celsius, ladite température de chauffe (T1) étant comprise entre 350 et 450 degrés Celsius.

16. Procédé selon l'une quelconque des revendications 1 à 15,
**caractérisé en ce que** chaque couche de surface (21) comporte un fil traceur (25) permettant de distinguer visuellement une couche de surface (21) d'une couche intermédiaire (16).

17. Pale comprenant des sous-ensembles en matériaux composites thermoplastiques, dans laquelle chaque sous-ensemble (10) comporte un arrangement interne (15) et au moins un arrangement externe (20) accolé à l'arrangement interne (15), l'arrangement externe (20) d'un sous-ensemble (10) étant adhérisé à l'arrangement externe (20) d'un autre sous-ensemble (10), chaque arrangement interne (15) comprenant un empilement de plis dits couches intermédiaires (16), chaque couche intermédiaire (16) comprenant des fibres de renfort imprégnées d'une matrice thermoplastique semi-cristalline, chaque arrangement externe (20) comprenant au moins un pli dit couche de surface (21), chaque couche de surface (21) comprenant des fibres de renfort imprégnées d'un alliage d'un polymère thermoplastique semi-cristallin et d'un polymère thermoplastique amorphe, et dans laquelle un film d'assemblage (50) comprenant un matériau thermoplastique amorphe (51) et un organe ferromagnétique (52) est interposé entre deux couches de surface (21) de deux sous-ensembles distinctes assemblés l'un à l'autre.

## Patentansprüche

1. Verfahren zur Herstellung eines Flügelblatts (1), wobei das Verfahren die folgenden Schritte umfasst:
- Herstellen von Unterbaugruppen (10) aus thermoplastischen Verbundwerkstoffen,
- Anordnen der Unterbaugruppen (10) in einer Fügeform (70),
- lokales Anordnen einer Mehrzahl von Fügefolien (50), die ein ferromagnetisches Element umfassen, wobei jede Fügefolie zwischen zwei Oberflächenschichten (21) von zwei getrennten Unterbaugruppen angeordnet ist, die zusammengefügt werden sollen,
- Zusammenfügen der Unterbaugruppen (10) in der Fügeform (70) durch Ausüben von Druck auf die Unterbaugruppen (10) und durch lokales Erwärmen durch elektromagnetische Induktion jeder Fügefolie (50) gemäß einem Erwärmungs- und Druckbeaufschlagungszyklus,
**dadurch gekennzeichnet, dass** jede Unterbaugruppe (10) eine innere Anordnung (15) und mindestens eine mit der inneren Anordnung (15) verbundene äußere Anordnung (20) umfasst, wobei die äußere Anordnung (20) einer Unterbaugruppe dazu bestimmt ist, an eine äußere Anordnung einer anderen Unterbaugruppe geklebt zu werden, wobei jede innere Anordnung (15) einen Stapel von als Zwischenschichten (16) bezeichneten Lagen umfasst, wobei jede Zwischenschicht (16) Verstärkungsfasern umfasst, die mit einer teilkristallinen thermoplastischen Matrix imprägniert sind, dass jede äußere Anordnung (20) mindestens eine als Oberflächenschicht (21) bezeichnete Lage umfasst, dass jede Oberflächenschicht (21) Verstärkungsfasern umfasst, die mit einer Legierung aus einem teilkristallinen thermoplastischen Polymer und einem amorphen thermoplastischen Polymer imprägniert sind, und dass jede Fügefolie ein amorphes thermoplastisches Material (51) umfasst.

2. Verfahren nach Anspruch 1,
**dadurch gekennzeichnet, dass** jede Verstärkungsfaser aus einer Liste ausgewählt wird, die umfasst: eine Glasfaser, eine Kohlenstofffaser, eine Basaltfaser, eine Aramidfaser.

3. Verfahren nach einem der Ansprüche 1 bis 2,
**dadurch gekennzeichnet, dass** jede Unterbaugruppe (10) aus einer Liste ausgewählt wird, die mindestens umfasst: einen Holm (30), eine Versteifung (40), eine Außenhaut (35), einen Grat (45).

4. Verfahren nach einem der Ansprüche 1 bis 3,
**dadurch gekennzeichnet, dass** das Flügelblatt (1) mindestens einen Holm (30), mindestens einen Grat (45), eine Mehrzahl von Versteifungen (40) und eine Mehrzahl von Außenhäuten (35) umfasst, wobei die Außenhäute (35) in Spannweitenrichtung verbunden sind, um eine obere Wand (2) zu bilden, und die Außenhäute (35) in Spannweitenrichtung verbunden sind, um eine untere Wand (3) zu bilden, jeder Grat (45) sowie jeder Holm (30) und jede Versteifung (40) sich zwischen der oberen Wand (2) und der unteren Wand (3) erstrecken, und dass mindestens eine Versteifung (40) an der Verbindungsstelle zwischen zwei Außenhäuten (35) der unteren Wand (3) und zwei Außenhäuten (35) der oberen Wand (2) angeordnet ist.

5. Verfahren nach einem der Ansprüche 1 bis 4,
**dadurch gekennzeichnet, dass** die teilkristalline thermoplastische Matrix PolyEtherEtherKeton (PEEK) ist.

6. Verfahren nach einem der Ansprüche 1 bis 5,
**dadurch gekennzeichnet, dass** das teilkristalline thermoplastische Polymer PolyEtherEtherKeton (PEEK) ist, und das amorphe thermoplastische Polymer Polyetherimid (PEI) ist.

7. Verfahren nach einem der Ansprüche 1 bis 6,
**dadurch gekennzeichnet, dass** die Legierung aus einem teilkristallinen thermoplastischen Polymer und einem amorphen thermoplastischen Polymer 70% PolyEtherEtherKeton (PEEK) und 30% Polyetherimid (PEI) umfasst.

8. Verfahren nach einem der Ansprüche 1 bis 7,
**dadurch gekennzeichnet, dass** das amorphe thermoplastische Material mindestens Polyetherimid (PEI) umfasst.

9. Verfahren nach einem der Ansprüche 1 bis 8,
**dadurch gekennzeichnet, dass** das ferromagnetische Element (52) Ferritpartikel oder ein metallisches Element umfasst.

10. Verfahren nach einem der Ansprüche 1 bis 9,
**dadurch gekennzeichnet, dass** das amorphe thermoplastische Material Benzophenon und/oder Propriophenon umfasst.

11. Herstellungsverfahren nach einem der Ansprüche 1 bis 10,
**dadurch gekennzeichnet, dass** der Schritt der Herstellung von Unterbaugruppen die folgenden Schritte zur Herstellung einer Unterbaugruppe (10) umfasst:
- Anordnen der Lagen in einer Herstellungsform (65),
- Erwärmen der Lagen in der Herstellungsform (65) gemäß einem Heizzyklus, der eine als Heiztemperatur (T1) bezeichnete maximale Temperatur erreicht.

12. Verfahren nach Anspruch 11,
**dadurch gekennzeichnet, dass** vor der Phase des Anordnens der Lagen in einer Herstellungsform (65), wobei die Lagen einer Unterbaugruppe geschlichtete Fasern umfassen, der Schritt des Herstellens von Unterbaugruppen (10) die folgenden Phasen des Herstellens der geschlichteten Fasern umfasst:
- Aufbringen eines Pulvers aus einem thermoplastischen Polymer auf mindestens eine ungeschlichtete Verstärkungsfaser,
- Adhäsion durch Erhitzen des thermoplastischen Polymers an der ungeschlichteten Verstärkungsfaser.

13. Verfahren nach einem der Ansprüche 11 bis 12,
**dadurch gekennzeichnet, dass** vor dem Schritt des Anordnens der Lagen in einer Herstellungsform (65) der Schritt des Herstellens von Unterbaugruppen die folgenden Schritte umfasst:
- Ablegen der Lagen eine nach der anderen in einer Positionierungsform (67), wobei jede in der Positionierungsform (67) abgelegte Lage lokal mit der vorher abgelegten Lage verschweißt wird,
- Übergeben der Lagen von der Positionierungsform (67) an die Fertigungsform (65).

14. Verfahren nach einem der Ansprüche 11 bis 13,
**dadurch gekennzeichnet, dass** der Heiz- und Druckbeaufschlagungszyklus (90) eine Phase (91) des Erhöhens der Temperatur bis zu einer als Fügetemperatur (T2) bezeichneten Maximaltemperatur der Fügefolien (50), eine Phase (92) des Aufrechterhaltens der Fügetemperatur (T2) und dann eine Phase (93) des Senkens der Temperatur der Fügefolien umfasst, wobei die Fügetemperatur (T2) niedriger als die Heiztemperatur (T1) ist.

15. Verfahren nach Anspruch 14,
**dadurch gekennzeichnet, dass** die Fügetemperatur (T2) zwischen 150 Grad Celsius und 210 Grad Celsius liegt und die Heiztemperatur (T1) zwischen 350 und 450 Grad Celsius liegt.

16. Verfahren nach einem der Ansprüche 1 bis 15,
**dadurch gekennzeichnet, dass** jede Oberflächenschicht (21) einen Kennfaden (25) zur visuellen Unterscheidung einer Oberflächenschicht (21) von einer Zwischenschicht (16) aufweist.

17. Flügelblatt mit Unterbaugruppen aus thermoplastischen Verbundwerkstoffen, wobei jede Unterbaugruppe (10) eine innere Anordnung (15) und mindestens eine an die innere Anordnung (15) angrenzende äußere Anordnung (20) aufweist, wobei die äußere Anordnung (20) einer Unterbaugruppe (10) an die äußere Anordnung (20) einer anderen Unterbaugruppe (10) geklebt ist, wobei jede innere Anordnung (15) einen Stapel von als Zwischenschichten (16) bezeichneten Lagen umfasst, wobei jede Zwischenschicht (16) Verstärkungsfasern umfasst, die mit einer teilkristallinen thermoplastischen Matrix imprägniert sind, wobei jede äußere Anordnung (20) mindestens eine als Oberflächenschicht (21) bezeichnete Lage umfasst, wobei jede Oberflächenschicht (21) Verstärkungsfasern umfasst, die mit einer Legierung aus einem halbkristallinen thermoplastischen Polymer und einem amorphen thermoplastischen Polymer imprägniert sind, und wobei eine Fügefolie (50), die ein amorphes thermoplastisches Material (51) und ein ferromagnetisches Element (52) umfasst, zwischen zwei Oberflächenschichten (21) von zwei separaten, miteinander verbundenen Unterbaugruppen angeordnet ist.

## Claims

1. Method for manufacturing a blade (1), said method comprising the following steps:
- manufacturing sub-assemblies (10) made of thermoplastic composite materials,
- arranging the sub-assemblies (10) in an assembly mould (70),
- locally arranging a plurality of assembly films (50) comprising a ferromagnetic member, each assembly film being interposed between two surface layers (21) of two separate sub-assemblies which are to be assembled together,
- assembling the sub-assemblies (10) together in the assembly mould (70) by exerting a pressure on said sub-assemblies (10) and by locally heating each assembly film (50) by means of electromagnetic induction according to a cycle for heating and applying pressure,
**characterised in that** each sub-assembly (10) comprises an internal arrangement (15) and at least one external arrangement (20) adjoining the internal arrangement (15), the external arrangement (20) of a sub-assembly being intended to be adhered to an external arrangement of another sub-assembly, each internal arrangement (15) comprising a stack of plies referred to as intermediate layers (16), each intermediate layer (16) comprising reinforcing fibres impregnated with a semi-crystalline thermoplastic matrix, each outer arrangement (20) comprising at least one ply referred to as a surface layer (21), each surface layer (21) comprising reinforcing fibres impregnated with an alloy of a semi-crystalline thermoplastic polymer and an amorphous thermoplastic polymer, each assembly film comprising an amorphous thermoplastic material (51).

2. Method according to claim 1,
**characterised in that** each reinforcing fibre is selected from a list comprising: a glass fibre, a carbon fibre, a basalt fibre, and an aramid fibre.

3. Method according to either claim 1 or claim 2,
**characterised in that** each sub-assembly (10) is selected from a list comprising at least: a spar (30), a stiffener (40), an outer cladding (35), and an edge strip (45).

4. Method according to any of claims 1 to 3,
**characterised in that** said blade (1) comprises at least one spar (30), at least one edge strip (45), a plurality of stiffeners (40) and a plurality of outer claddings (35), some outer coverings (35) adjoining spanwise to form an upper wing surface wall (2), some outer coverings (35) adjoining spanwise to form a lower wing surface wall (3), each edge strip (45) and each spar (30) and each stiffener (40) extending between said upper wing surface wall (2) and said lower wing surface wall (3), at least one stiffener (40) being located at the junction between two outer claddings (35) of the lower wing surface wall (3) and two outer claddings (35) of the upper wing surface wall (2).

5. Method according to any of claims 1 to 4,
**characterised in that** said semi-crystalline thermoplastic matrix is polyether ether ketone (PEEK).

6. Method according to any of claims 1 to 5,
**characterised in that** said semi-crystalline thermoplastic polymer is polyether ether ketone (PEEK), said amorphous thermoplastic polymer being polyetherimide (PEI).

7. Method according to any of claims 1 to 6,
**characterised in that** said alloy of a semi-crystalline thermoplastic polymer and an amorphous thermoplastic polymer comprises 70% polyether ether ketone (PEEK) and 30% polyetherimide (PEI).

8. Method according to any of claims 1 to 7,
**characterised in that** said amorphous thermoplastic material comprises at least polyetherimide (PEI).

9. Method according to any of claims 1 to 8,
**characterised in that** said ferromagnetic member (52) comprises ferrite particles or a metal element.

10. Method according to any of claims 1 to 9,
**characterised in that** said amorphous thermoplastic material comprises benzophenone and/or propriophenone.

11. Manufacturing method according to any of claims 1 to 10,
**characterised in that** said step of manufacturing sub-assemblies comprises the following stages for manufacturing a sub-assembly (10):
- arranging said plies in a manufacturing mould (65),
- heating said plies in the manufacturing mould (65) according to a heating cycle that reaches a maximum temperature referred to as the heating temperature (T1).

12. Method according to claim 11,
**characterised in that**, prior to the stage of arranging said plies in a manufacturing mould (65), said plies of a sub-assembly comprising sized fibres, said step of manufacturing sub-assemblies (10) comprises the following stages for manufacturing said sized fibres:
- applying a powder of a thermoplastic polymer onto at least one desized reinforcing fibre,
- adhering said thermoplastic polymer to the desized reinforcing fibre by means of heating.

13. Method according to either claim 11 or claim 12,
**characterised in that**, prior to the stage of arranging said plies in a manufacturing mould (65), said step of manufacturing sub-assemblies comprises the following stages:
- depositing the plies one by one in a positioning mould (67), each ply deposited in the positioning mould (67) being locally welded to the previously deposited ply,
- transferring the plies from the positioning mould (67) to the manufacturing mould (65).

14. Method according to any of claims 11 to 13,
**characterised in that** said cycle (90) for heating and applying pressure comprises a stage (91) of a temperature increase to a maximum temperature referred to as the assembly temperature (T2) of the assembly films (50), a stage (92) of maintaining said assembly temperature (T2), and then a stage (93) of reducing the temperature of the assembly films, said assembly temperature (T2) being lower than said heating temperature (T1).

15. Method according to claim 14,
**characterised in that** said assembly temperature (T2) is between 150 degrees Celsius and 210 degrees Celsius, said heating temperature (T1) being between 350 and 450 degrees Celsius.

16. Method according to any of claims 1 to 15,
**characterised in that** each surface layer (21) comprises a tracer wire (25) which makes it possible to visually distinguish a surface layer (21) from an intermediate layer (16).

17. Blade comprising sub-assemblies made of thermoplastic composite materials, wherein each sub-assembly (10) comprises an internal arrangement (15) and at least one external arrangement (20) adjoining the internal arrangement (15), the external arrangement (20) of a sub-assembly (10) being adhered to the external arrangement (20) of another sub-assembly (10), each internal arrangement (15) comprising a stack of plies referred to as intermediate layers (16), each intermediate layer (16) comprising reinforcing fibres impregnated with a semi-crystalline thermoplastic matrix, each outer arrangement (20) comprising at least one ply referred to as a surface layer (21), each surface layer (21) comprising reinforcing fibres impregnated with an alloy of a semi-crystalline thermoplastic polymer and an amorphous thermoplastic polymer, and wherein an assembly film (50) comprises an amorphous thermoplastic material (51) and a ferromagnetic member (52) is interposed between two surface layers (21) of two separate sub-assemblies assembled together.
